# EUROPEAN PATENT SPECIFICATION

(11) **EP 0 396 417 B1**
(45) Date of publication and mention of the grant of the patent: **13.03.1996**
(21) Application number: 90304834.6
(22) Date of filing: 03.05.1990
(51) Int. Cl.: C08F 4/658, C08F 10/02

(54) **Ziegler-Natta-catalyst component, its preparation and use**
Ziegler-Natta-Katalysatorbestandteil, seine Herstellung und seine Anwendung
Composant de catalyseur Ziegler-Natta, préparation et utilisation

(30) Priority: 04.05.1989 FI 892153
(43) Date of publication of application: 07.11.1990
(73) Proprietor: BOREALIS A/S, DK-2800 Lyngby (DK)
(72) Inventor: Sormunen, Pekka, SF-06100 Porvoo (FI); Iiskola, Eero, SF-06100 Porvoo (FI); Alanko, Anne, SF-06100 Porvoo (FI)
(74) Representative: Woods, Geoffrey Corlett

(56) References cited:
- EP-A- 0 243 327
- WO-A-87/07620
- US-A- 4 071 674

## Description

The invention relates to a procatalyst of a catalyst system for the polymerization of olefins consisting of magnesium halide particles, to the surface of which has been attached a titanium compound and optionally an electron donor.

For the polymerization of olefins is generally used the so-called Ziegler-Natta catalyst system, which consists of a so-called procatalyst and a cocatalyst. The procatalyst is based on a compound of a transition metal of any of the groups IVB-VIII of the periodic table of elements and the cocatalyst is based on an organometallic compound of a metal of any of the groups IA-IIIA of the periodic table of elements. Generally, electron donor compounds improving and modifying the catalytic properties are also contained in the catalyst system.

In the preparation of heterogenic polymerization catalysts it is general to use a carrier compound as the component improving the polymerization activity, on which carrier compound the transition metal compound is layered. Usual carrier compounds are silicon dioxide, aluminium oxide, magnesium oxide, titanium oxide, carbon in various forms, and different kinds of polymers. Magnesium compounds, such as alkoxides, hydroxides, hydroxy halides and halides, have turned out to be significant carrier compounds and the last-mentioned of these have lately become the most significant carrier component of procatalyst compositions.

As the magnesium halides do not in their basic crystal form become activated very efficiently by a transition metal compound it is necessary to deform their crystal structure. Conventionally this takes place by grinding e.g. in a ball mill, whereby the typical result is a finely-divided powder having a large specific surface, the crystal lattices of whose particles are strongly deformed. When such a powder is activated to a procatalyst composition by layering it with a transition metal compound, and is thereafter reduced by an organometallic compound acting as a cocatalyst, a very active polymerization catalyst is obtained.

The usual grinding method of magnesium halide has, however, the disadvantage that it consumes very much energy, causes wear and corrosion in the apparatus and is only good for the preparation of a catalyst by a laborious batch process. A more modern and efficient way to reduce the crystallinity of magnesium halides and thus to increase their capability of being activated by transition metal compounds, is to modify them chemically. Many methods based on chemical treatment are known from the litterature. Through the JP specification 59 215 301 is known a method for the polymerization or copolymerization of ethylene, in which the procatalyst composition was prepared by forming particles from magnesium chloride and ethanol, reacting the particles with triethyl aluminium and activating the thus obtained particulate product with titanium tetra chloride. The carrier complex consisting of magnesium dichloride and ethanol was prepared by emulsion technique. In that technique the carrier melt has been dispersed in n-decane as spheroidal melt particles. The carrier particles in the emulsion have been solidified by transferring the emulsion to cold hydrocarbon medium. A drawback of this method is, among other things, that components, such as emulgator, is needed in the preparation of the procatalyst composition, which might prove disadvantageous in the later phases of the preparation of the catalyst. Moreover, a condition for the reuse of the medium is the use of a separate refining and recirculation apparatus.

The U.S. patent specification 4,071,674 presents the treatment of a carrier consisting of magnesium dihalide and alcohol by an organic compound of a metal like aluminium before it is activated with a compound of a transition metal like titanium. According to the teachings of this publication the activation capability of the particles and the activity of the final procatalyst particles grows owing to the organometal compound treatment. A disadvantage of the method is, however, that the morphology of the adduct of magnesium and alcohol has been interfered. Thus, according to the examples of the publication the adduct is prepared by suspending a dry magnesium halide into hydrocarbon, after which the alcohol is added dropwise. As a result spontaneously crystallizing adduct particles, whose morphology can be very disadvantageous as far as the polymerization is concerned, are produced from the solution.

International Publication WO 87/07620 corresponding to FI-application 86 2459 presents the preparation of a procatalyst by spray-crystallizing a mixture of a magnesium dihalide and an alcohol to a crystalline complex compound having, compared with the previous methods, more free hydroxyl groups than before in its particles. The final procatalyst was obtained by activating the spray-crystallized product mentioned by a four-valent titanium compound. In this publication it has been possible to attach more alcohol molecules than before to the magnesium dihalide. When in the activation with titanium chloride these alcohol molecules are displaced, more titanium compound is respectively attached to the magnesium dihalide. It can thus be supposed that such a procatalyst composition is more active than before. In the publication, however, no organoaluminium compound treatment preceding the titanium compound treatment has been used.

The prior art publications disclose that when a pretreatment of the magnesium halide-alcohol complex with an organometal compound is used, neither the morphology of the product nor the so-called maximization of the number of the active centers have been taken into consideration. These matters have, however, been taken into consideration in the FI-application mentioned, but in that publication, on the other hand, the preactivation by an organometal compound has not been used. Furthermore, in the publications mentioned titanium tetrachloride has been used as the titanium compound which is very sensitive e.g. for hydrogen and moisture. On the other hand, the prior art has teached so far that titanium tetrachloride is much more active than the less sensitive titanium compounds, such as titanium alcoxides.

On the other hand, examples of the use of titanium alcoxides of the form Ti(OR)₄ are also known in the patent litterature. The DE patent specification 3,215,893 describes a catalyst, which is prepared from MgCl₂ and Ti(OBu)₄, whereby the Ti/Mg ratio was 2.0. These materials are mixed together and dissolved in heptane. Then follows a methyl hydrosiloxane treatment and after that still a treatment with titanium tetrachloride and methyl hydroxysilane. Such a treatment is very complicated and in it a soluble complex MgCl₂ x 2 Ti(OBu)₄ is used. Moreover, an extra treatment is needed in the method, which leads to a procatalyst sensitive to impurities. The EP application print 136,623 describes a catalyst system, in which magnesium alkoxide, e.g. Mg(OEt)₂ is treated with aluminium alkyl chloride. Titanic acid ester, e.g. Ti(OEt)₄ is added onto the carrier obtained.

According to example 1 of the publication the product thus obtained has been preactivated by diethyl aluminium chloride and, furthermore, prepolymerized by 1-hexene. A procatalyst composition has been used for the homo- and copolymerization of ethylene. In this publication Mg(OEt)₂ has been used instead of magnesium halide and a controlled morphology has not been achieved in the method, but the carrier has been allowed to solidify spontaneously into very fine particles which also leads to a finely-divided polymer product.

US patent publication 4,461,882 describes a catalyst which is prepared by mixing together a titanium tetra-alkoxy compound, e.g. Ti(OEt)₄, and an organoaluminium compound, e.g. ethyl aluminium chloride, whereby the mixture obtained is reacted with an organomagnesium compound, e.g. dibuthyl magnesium. Finally, this reaction product is still treated with titanium tetrachloride. The catalyst obtained is suitable for the polymerization of ethylene. In this method the Mg-compound is a liquid magnesium dialkyl and in that the titanium tetra-alkoxide is reacted with aluminium alkyl chloride before the magnesium compound is treated with it. It is very hard to control a complicated process like this taking place in a homogeneous state and it does not produce a product of advantageous morphology. Moreover, the patent teaches the use of titanium tetrachloride which leads to a procatalyst sensitive for impurities. This does not meet with the stability requirements set for the procatalyst according to the present application. Furthermore, the publication does not mention the treatment of the procatalyst composition through prepolymerization.

EP application print 281,524 describes a catalyst prepared by spray-drying an ethanol solution of magnesium dichloride at high temperature, after which the carrier still containing some ethanol (18-25% of OH-groups) is reacted with titanium tetraalkoxide and finally reduced by diethylaluminium chloride to a catalyst component. In the method according to this publication spraydrying from an ethanol solution at high temperature is used for the preparation of a carrier. This method lacks the treatment with aluminium alkyl or the like before adding the titanium product, which has proven an efficient preactivation stage. Accordingly, the procatalyst thus obtained is not sufficiently active as far as the produced active centers and the morphology are concerned.

The present invention provides a procatalyst whose components have an advantageous morphology as far as the activity of the catalyst system is concerned, and which has many active centers on the surface of the particles. Moreover, the active transition metal component of the new procatalyst is not sensitive to impurities, such as oxygen and moisture.

The procatalyst of the present invention is prepared by a method which comprises (a) forming crystalline complex particles by spray-crystallizing a mixture of magnesium halide and at least one alcohol, and optionally an electron donor, (b) reacting the complex particles with an organometallic compound of at least one metal of groups I-III or a mixture thereof, (c) activating the reaction product from stage (b) with at least one titanium compound which is titanium alkoxide and optionally an electron donor, and (d) optionally carrying out a prepolymerization with the activated particles.

The new procatalyst consists of substantially amorphous and spheroidal magnesium halide particles having attached on their surface a titanium alkoxide and optionally an electron donor.

It has been discovered that by combining the spray-crystallization of a mixture of magnesium halide and alcohol and the use of a titanium alkoxide as the titanium compound a new procatalyst can be prepared which is very active and simultaneously non-sensitive to impurities. Accordingly, by spray-crystallizing the mixture of magnesium halide and alcohol a medium is obtained which forms even with titanium alkoxide so active a procatalyst that it is comparable with a procatalyst based on titanium tetrachloride. The new procatalyst is particularly suitable for the polymerization or copolymerization of ethylene to form a polymer with a narrow molecular weight distribution. By performing the polymerization in two or more phases having different hydrogen pressure a polymer or copolymer of ethylene with a bi-or polymodal molecular weight distribution can also be prepared.

The magnesium halide carrier is first activated to an advantageous crystal shape by allowing it complex with at least one crystal solvent and possibly also an electron donor. Particles are formed by spray-crystallizing the mixture of magnesium dihalide and one or more alcohols to complex particles of the magnesium dihalide and the alcohol. The spray-crystallizing is preferably carried out by heating the magnesium dihalide solvated with the alcohol to form a homogeneous liquid and thereafter spraying the liquid using a hot spraying gas into a cooled spray chamber where carrier complex particles of the magnesium dihalide and the alcohol are formed without essential evaporation of alcohol. The spray-crystallization is carried out using gases, such as nitrogen, cooled and inert with respect to the reaction components.

The magnesium halide shall be essentially anhydrous and dry. The most preferable magnesium halide is magnesium dichloride. Alcohols have been noted to be very advantageous crystal solvents, most preferably the dry (anhydrous) absolute ethanol. Ethanol forms with magnesium dichloride a crystalline complex, MgCl₂x aEtOH, in which a is 0-6, preferably 2-6 and most preferably 3. The reaction mixture of magnesium halide and alcohol, e.g. magnesium dichloride and ethanol, is melted at elevated temperature and agitated thereafter for obtaining a homogeneous liquid. Then the homogeneous liquid is fed at a suitable rate into a cooled spray chamber, to which is also conducted cooled inert gas, such as nitrogen gas, cooled as the cooling medium. The liquid is fed through a spray jet, the construction of which has been designed substantially spheroidal particles without evaporation of the crystal solvent. A hot inert gas like nitrogen is used as the carrier i.e. spraying gas of the liquid. Accordingly, the spray-crystallization of the carrier takes place by substantially similar method as that presented in our FI patent application 86 2459.

In the spray-freezing the spraying of the melt complex takes place into cooled gas so that hardly any transition or evaporation of substance takes place in the process and the solidifying melt crystallizes in the spraying substantially to its original consistency. As the complex particles thus contains plenty of alcohol hydroxyl groups reacting with the organo metal compound and finally with the transition metal compound, the procatalyst composition becomes even more active than before.

In the following step the spray-crystallized complex of magnesium dihalide and alcohol is reacted in the form of particles with an organometallic compound of at least one metal of the groups I-III of the periodic system. The compound can contain both organic groups, such as alkyl or aryl groups, or inorganic groups, such as hydrogen atom or a halogen. Preferable organometallic compounds are organoaluminium compounds, preferably trialkyl aluminium compounds, such as triethylaluminium. As other compounds may be mentioned the diethylaluminium chloride, ethyl aluminium chloride and ethyl aluminium sesquichloride.

The treatment with an organometallic compound simply takes place by bringing the catalyst complex particles prepared by spray-crystallization in contact with the organometallic compound, such as aluminium alkyl. The treatment is preferably carried out at a temperature of -20° - +30°C, whereby at the end of the treatment the temperature can be raised in order to complete the reaction. Preferably the treatment lasts for about 30-180 min. The aluminium/ethanol proportion is preferably 0.5-2, most preferably 1. The treatment leads substantially to the quantitative removal of the crystal solvent i.e. alcohol and the result is a preactivated amorphous carrier with a very great surface area.

The actual activation of the complex particles preactivated by an organometallic compound is performed with at least the titanium compound and optionally also with an electron donor. The preactivated carrier is brought into contact with the titanium compound mentioned whereby on the surfaces are created catalytically active complexes between the magnesium halide, such as magnesium dichloride, and the titanium compound. By choosing suitable titanium compounds procatalyst compositions relatively non-sensitive to impurities but active in the polymerization and copolymerization of ethylenes are obtained, which procatalyst compositions produce polymer with a relatively narrow molecular weight distribution.

The titanium compounds used in the present invention are titanium alkoxy compounds, particularly the compounds of the form Ti(OR)₄, in which R is an alkyl group containing 1-8 carbon atoms. Particularly advantageous are Ti(OC₂H₅)₄, Ti(n-OC₄H₉)₄ and Ti(i-OC₃H₇)₄. The treatment with a titanium compound is carried out at a temperature of 30° - 110°C and it lasts preferably 30-180 min. It is advantageous to keep the molar ratio Ti/Mg small, smaller or equivalent to 1, so that the titanium alkoxide would not dissolve the magnesium dichloride. As the abovementioned titanium compounds are liquids and not as sensitive to moisture as the chloride compounds of titanium, this activation stage is much easier than in the conventional methods for preparing catalysts.

So-called electron donor compounds can be added into the procatalyst composition in any stage of the treatment, i.e. before the particle crystallization, during or after the actual activation or optionally in the prepolymerization stage.

The electron donors can be either an aliphatic or aromatic carboxylic acid or an alkyl ester or acid halide thereof, a cyclic ether, an aliphatic or aromatic ketone, an aliphatic or aromatic aldehyde, an aliphatic or aromatic nitrile, an aliphatic or aromatic amine or an aromatic phosphine or a mixture of such compounds.

If desired a procatalyst composition can be activated by prepolymerizing one or several suitable alpha-olefins on its surface. Hereby among others those advantages are attained that the start of the polymerization is more controlled and that the mechanical durability of the procatalyst composition particles is improved, whereby the capability of feeding the catalyst component into the polymerizing processes is improved.

The prepolymerization can advantageously be carried out so that the washed procatalyst composition is treated with an organoaluminium compound acting as a cocatalyst and by letting alphaolefin, preferably ethylene, bubble through the liquid at normal pressure,

As the cocatalyst of the prepolymerization stage can be chosen any suitable organometallic catalyst component of Ziegler-Natta-catalyst system. It is, however, advantageous to use organoaluminium compounds of the form

AlRₘX₃₋ₘ

or

Al₂R₃X₃

in which R is an alkyl group, cycloalkyl or aryl group having 1-10 carbon atoms, X is a halogen atom, such as Cl or Br, and m = 1, 2, or 3. Most preferable are the aluminium alkyl chlorides, e.g. diethylaluminium chlorides.

An outside electron donor, which is a straight-chain or branched compound, can be used in the prepolymerization. Very advantageous are the compounds of the formula (1): 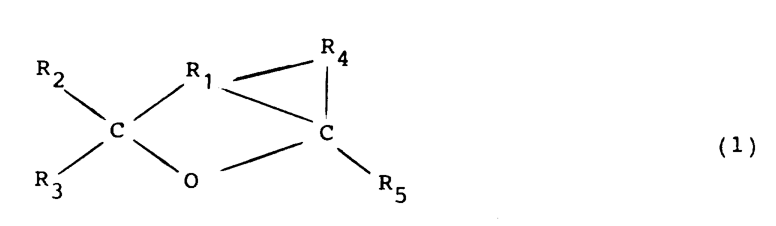 wherein R₁ and R₄ are hydrocarbon groups having preferably 2-5 carbon atoms, R₂, R₃ and R₅ are each of them hydrogen atoms or alkyl groups having 2-5 carbon atoms. Particularly advantageous are cineoles, such as 1,4-; 1,8- and m-cineole. An outside donor can also be a silicon compound, preferably an aryl alkyl silane, particularly diphenyldimethoxy silane.

The aluminium/titanium ratio is in the prepolymerization between 1 and 50, preferably 1-10. Before adding the monomer the procatalyst composition is allowed to be in contact with the aluminium compound acting as the cocatalyst for 5-30 min., preferably for 10-15 min., so that the titanium centers are activated before the monomer addition. The monomer/titanium ratio is preferably between 10-200, and most preferably about 10-40. The prepolymerization can be performed in normal pressure and at normal temperature 10-30°C and it usually lasts 5-120 min. If no prepolymerization is carried out, it is, however, advantageous to carry out a preactivation stage before the polymerization.

The invention is illustrated by the following examples:

### Example 1

### Preparation of a carrier

A spray-crystallized, spherical carrier complex MgCl₂ x 3 EtOH was prepared according to the patent application WO 87/07620 (Neste Oy).

### C. Polymerization

To a three-litre reactor is added 2 1 pentane refined with activated aluminium oxide and molecule sieves. 50 mg of a procatalyst composition was fed into the polymerization reactor and 0.3 ml of diethylaluminium chloride (Al/Ti = 10) was added and the temperature was raised to 80°C. The mixture was allowed to mix for 15 minutes. After the procatalyst and cocatalyst reaction a normal test polymerization of ethylene was carried out. was carried out. Hydrogen was pressurized into a vessel of 0.5 1 at 5 bar, from which it was conducted together with the ethylene and the cocatalyst solution (5 ml 10% TEA/pentene) into the reactor. The total pressure was by means of ethylene raised to 15 bars, the temperature to 90°C and the polymerization was continued for 60-90 min. During the polymerization ethylene gas was added in order to keep the pressure constant.

### Example 2

### B. The activation with titanium compound.

5 g of a preactivated carrier was dissolved in 200 ml of pentane, cooled to a temperature of -10°C and to the amount was added 17 ml (0.05 moles) of Ti(OBu)₄. The temperature was raised to 36°C and kept there for 1 hour. The obtained product was washed four times with pentane and heptane. The dried procatalyst composition 2B contained 11.0% of Mg and 4.6% of Ti.

### C. Polymerization

The polymerization and copolymerization was performed with the pro- and cocatalyst reaction stages described in example 1, whereby 30 mg of procatalyst composition 2B and 0.3 ml of 10% by weight diethylaluminium chloride (Al/Ti = 5) was used. The reaction time was 15 min. and the temperature 60°C. The copolymerization of ethylene with alpha-olefins was carried out as above, except that the comonomer (4-methyl-1-pentene, 300 ml) was added to the medium (1800 ml of pentane) immediately after the addition of the catalyst. The two-stage polymerization was carried out in two stages for the preparation of a polyethylene with a bimodale molecule weight distribution. In the first stage the pressure of hydrogen was at the temperature of 26°C 8.0 bar and at 84°C 10.6 bar. After the ethylene feed the total pressure was 13.2 bar. The duration of the polymerization was 35 min. and 200 g of ethylene was consumed. After that the reactor was cooled and the gases were washed away with nitrogen. For the second stage 300 mg of 4-methyl-1-pentene was added to the reactor, after which the reactor was heated to 530C, whereby the pressure was 20 bars. After that ethylene was added. The second polymerization stage lasted for 51 min. and 201 g of ethylene was consumed.

### D. Prepolymerization

1.0 g of procatalyst composition 2B was added to the reactor, elutriated in pentane and 8.9ml of 10% by weight diethylene aluminium chloride solution was added. The mixture was agitated for 15 min. at room temperature. As the titanium content of the sample taken from the reaction mixture was obtained 2.8%. After that ethylene gas was conducted through the reaction mixture for 5 minutes at normal pressure. The titanium content of the prepolymerized procatalyst composition 2C was 1.7%.

### Example 3

### B. The activation with a titanium compound

In the activation was acted as in example 2, but 7.4 ml (0.025 moles) of Ti(i-OPr)₄ was added. 7.3g of catalyst component 3B with a titanium content of 10.2% and a magnesium content of 8.1% was recovered.

### C. Polymerization

For the polymerization 40 mg of catalyst component 3B is brought to react with 0.8 ml of 10% solution of diethylaluminium chloride for 15 min. at a temperature of 65°C. The results have been presented in Table 1.

### D. Prepolymerization

1.5g of the procatalyst composition 3B was added to pentane, 30ml of 10% diethylaluminium chloride solution (Al/Ti=5) was added and the mixture was agitated for 10 min. The product was washed once with pentane. The sample taken from the product revealed that the titanium content was 5.1%. Then ethylene gas was conducted through the solution for 5 min. at room temperature, whereby the ethylene as polymerized on the surface of the procatalyst component. The product was washed twice with pentane and dried. The titanium content of the procatalyst composition 3C thus prepolymerized was 3.4%.

### Example 4

### B. The activation with a titanium compound.

The preactivated carrier was activated with a titanium compound as in example 2, but as the titanium compound was used Ti(OEt)₄, 10.5ml (0.05 moles) of which was added at a temperature of 0°C. 1.3g of the procatalyst composition 4B with a titanium content of 5.5% was recovered.

### C. Polymerization

The polymerization was carried out with the above-mentioned procatalyst composition in the same way as in example 1.

The polymerization results obtained in the examples have been presented in the following table:

**Table 1**

| Example | KAT | G PE | AKT | SI(21.6) | SI(2.16) | SVS | Density |
|---|---|---|---|---|---|---|---|
| | mg | | gPE/g | kat h | | | |
| 1C | 30 | 836 | 18573 | 51.7 | 1.63 | 31.8 | |
| 2B | 30 | 109 | 2425 | 8.7 | 0.34 | 25.6 | |
| 2C | 55 | 747 | 13576 | 56.6 | 2.07 | 27.3 | |
| 2C kopol | 28 | 234 | 8357 | 32.1 | 1.31 | 24.4 | 0.94 |
| 2C stage 2 | 100 | 401 | - | 32.3 | 0.48 | 67.5 | |
| 3C | 23 | 381 | 16565 | 18.6 | 0.63 | 29.5 | |
| 4B | 40 | 457 | 11425 | 66.6 | 2.53 | 26.3 | |

By the present invention the following advantages among others are obtained:
- the procatalyst is less sensitive to impurities,
- the procatalyst has together with the cocatalyst a high activity and it produces polymer with a narrow molecular weight distribution,
- the polymerization mixture has a good hydrogen sensitivity, i.e. it is easier to control the molecular weight,
- the polymerization mixture is also sensitive to comonomer, which makes the preparation of copolymers easier.

## Claims

1. Method for the preparation of a procatalyst of a catalyst system for the polymerization of olefins, which comprises (a) forming crystalline complex particles by spray-crystallizing a mixture of magnesium halide and at least one alcohol, and optionally an electron donor, (b) reacting the complex particles with an organometallic compound of at least one metal of groups I-III or a mixture thereof, (c) activating the reaction product from stage (b) with at least one titanium compound which is titanium alkoxide and optionally an electron donor, and (d) optionally carrying out a prepolymerization with the activated particles.

2. Method according to claim 1, in which the spray-crystallizing of stage (a) is carried out by heating the magnesium halide and alcohol to form a homogeneous liquid and spraying the liquid using hot spraying gas into a cooled spray chamber, so that complex particles of magnesium halide and alcohol are formed without substantial evaporation of the alcohol.

3. Method according to claims 1 or 2, in which the magnesium halide is magnesium dichloride.

4. Method according to any one of the preceding claims, in which the alcohol used is aliphatic, and is preferably ethanol.

5. Method according to any one of the preceding claims, in which the organometallic compound used in stage (b) is a trialkyl aluminium or an aluminium alkyl halide, preferably triethylaluminium.

6. Method according to any one of the preceding claims, in which the titanium alkoxide used is a compound of the formula:
Ti(OR)₄
in which R is an alkyl group containing 1-8 carbon atoms, preferably an ethyl, n-butyl or isopropyl group.

7. Method according to any one of the preceding claims, in which the Ti/Mg ratio at stage (c) is 1.

8. Method according to any one of the preceding claims, in which the prepolymerization stage (d) is carried out by polymerizing an alpha-olefin, preferably ethylene, at normal temperature and normal pressure with the activated particles and an organometallic cocatalyst compound of at least one metal of group IA-IIIA.

9. Method according to claim 8, in which the cocatalyst is an organoaluminium compound of the formula AlRₘX₃₋ₘ or Al₂R₃X₃, wherein R is an alkyl, cycloalkyl or aryl group having 1-10 carbon atoms, X is halogen, such as C1 or Br, and m is 1, 2 or 3, and is preferably diethylaluminium chloride.

10. Use of a procatalyst composition prepared by the method according to any of the claims 1-9 for the polymerization or copolymerization of ethylene to form a polymer with a narrow molecular weight distribution.

11. Use according to claim 10, in which the polymerization is carried out in two or more states under different hydrogen pressures to prepare a polymer or copolymer of ethylene with a bi- or polymodal molecular weight distribution.

## Patentansprüche

1. Verfahren zur Herstellung eines Prokatalysators eines Katalysatorsystems zur Polymerisation von Olefinen, umfassend
(a) Bildung von kristallinen Komplexpartikeln durch Sprühkrisatallisation eines Gemisches von Magnesiumhalogenid und mindestens einem Alkohol, und wahlweise einem Elektronendonor,
(b) Umsetzung der Komplexpartikel mit einer organometallischen Verbindung von mindestens einem Metall der Gruppen I bis III oder einem Gemisch davon,
(c) Aktivieren des Reaktionsproduktes aus Stufe (b) mit mindestens einer Titanverbindung, die ein Titanalkoxid ist und wahlweise einem Elektronendonor, und
(d) wahlweise Ausführen einer Prepolymerisation mit den aktivierten Partikeln.

2. Verfahren nach Anspruch 1, wobei die Sprühkrisatallisation von Stufe (a) ausgeführt wird durch Erhitzen des Magnesiumhalogenids und Alkohols zur Bildung einer homogenen Flüssigkeit und Sprühen der Flüssigkeit unter Verwendung von heißem Sprühgas in eine gekühlte Sprühkammer, so daß Komplexpartikel von Magnesiumhalogenid und Alkohol gebildet werden ohne wesentliche Verdampfung des Alkohols.

3. Verfahren nach Anspruch 1 oder 2, wobei das Magnesiumhalogenid Magnesiumdichlorid ist.

4. Verfahren nach einem der vorstehenden Ansprüche, wobei der verwendete Alkohol aliphatisch ist, und vorzugsweise Ethanol ist.

5. Verfahren nach einem der vorstehenden Ansprüche, wobei die in Stufe (b) verwendete organometallische Verbindung Trialkylaluminium oder ein Aluminiumalkylhalogenid ist, vorzugsweise Triethylaluminium.

6. Verfahren nach einem der vorstehenden Ansprüche, wobei das verwendete Titanalkoxid eine Verbindung der Formel Ti(OR)₄ ist, wobei der Rest R ein Alkylrest mit 1-8 Kohlenstoffatomen ist, vorzugsweise ein Ethyl-, n-Butyl- oder Isopropylrest.

7. Verfahren nach einem der vorstehenden Ansprüche, wobei das Ti/Mg-Verhältnis in Stufe (c) 1 beträgt.

8. Verfahren nach einem der vorstehenden Ansprüche, wobei die Prepolymerisationsstufe (d) ausgeführt wird durch Polymerisieren eines alpha-Olefins, vorzugsweise von Ethylen, bei Normaltemperatur und Normaldruck mit den aktivierten Partikeln und einer organometallischen Cokatalysatorverbindung von mindestens einem Metall der Gruppe IA bis IIIA.

9. Verfahren nach Anspruch 8, wobei der Cokatalysator eine Organoaluminiumverbindung der Formel AlRₘX₃₋ₘ oder Al₂R₃X₃ ist, wobei der Rest R ein Alkyl-, Cycloalkyl- oder Arylrest mit 1-10 Kohlenstoffatomen ist, der Rest X ein Halogenatom ist, wie Cl oder Br, und m den Wert 1, 2 oder 3 hat, und vorzugsweise Diethylaluminiumchlorid ist.

10. Verwendung einer Prokatalysatorzusammensetzung, hergestellt nach dem Verfahren nach einem der Ansprüche 1-9, zur Polymerisation oder Copolymerisation von Ethylen zur Bildung eines Polymeren mit einer engen Molekulargewichtsverteilung.

11. Verwendung nach Anspruch 10, wobei die Polymerisation ausgeführt wird in zwei oder mehr Stufen unter unterschiedlichen Wasserstoffdrücken zur Herstellung eines Polymeren oder Copolymeren von Ethylen mit einer bi- oder polymodalen Molekulargewichtsverteilung.

## Revendications

1. Procédé pour la préparation d'un procatalyseur d'un système catalytique pour la polymérisation d'oléfines, qui comprend (a) la formation de particules complexes cristallines en cristallisant par pulvérisation un mélange d'halogénure de magnésium et d'au moins un alcool et, facultativement, d'un donneur d'électrons, (b) la réaction des particules complexes avec un composé organométallique d'au moins un métal des groupes I à III ou un mélange de ceux-ci, (c) l'activation du produit de réaction du stade (b) avec au moins un composé du titane qui est un alcoxyde de titane et, facultativement, un donneur d'électrons, et (d) la mise en oeuvre facultative d'une prépolymérisation avec les particules activées.

2. Procédé selon la revendication 1, dans lequel la cristallisation par pulvérisation du stade (a) est effectuée en chauffant l'halogénure de magnésium et l'alcool pour former un liquide homogène et en pulvérisant le liquide en utilisant un gaz de pulvérisation chaud dans une chambre de pulvérisation refroidie, de sorte que des particules complexes de l'halogénure de magnésium et de l'alcool se forment sans évaporation substantielle de l'alcool.

3. Procédé selon les revendications 1 ou 2, dans lequel l'halogénure de magnésium est le dichlorure de magnésium.

4. Procédé selon l'une quelconque des revendications précédentes, dans lequel l'alcool utilisé est aliphatique et est de préférence l'éthanol.

5. Procédé selon l'une quelconque des revendications précédentes, dans lequel le composé organométallique utilisé dans le stade (b) est un trialkylaluminium ou un halogénure d'alkylaluminium, de préférence le triéthyl-aluminium.

6. Procédé selon l'une quelconque des revendications précédentes, dans lequel l'alcoxyde de titane utilisé est un composé de formule :
Ti(OR)₄
dans laquelle R est un groupe alkyle contenant 1 à 8 atomes de carbone, de préférence un groupe éthyle, n-butyle ou isopropyle.

7. Procédé selon l'une quelconque des revendications précédentes, dans laquelle le rapport Ti/Mg au stade (c) est 1.

8. Procédé selon l'une quelconque des revendications précédentes, dans lequel le stade de prépolymérisation (d) est effectué en polymérisant une alpha-oléfine, de préférence l'éthylène, à température normale et pression normale avec les particules activées et un composé cocatalyseur organométallique d'au moins un métal de groupe IA à IIIA.

9. Procédé selon la revendication 8, dans lequel le cocatalyseur est un composé organoaluminique de la formule AlRₘX₃₋ₘ ou Al₂R₃X₃, où R est un groupe alkyle, un groupe cycloalkyle ou aryle ayant 1 à 10 atomes de carbone, X est un halogène tel que Cl ou Br, et m est 1, 2 ou 3, et est de préférence le chlorure de diéthylaluminium.

10. Utilisation d'une composition de procatalyseur préparée par le procédé selon l'une quelconque des revendications 1 à 9 pour la polymérisation ou copolymérisation de l'éthylène pour former un polymère ayant une distribution de poids moléculaire étroite.

11. Utilisation selon la revendication 10, dans laquelle la polymérisation est effectuée en deux états ou plus sous différentes pressions d'hydrogène pour préparer un polymère ou copolymère d'éthylène ayant une distribution de poids moléculaire bi- ou polymodale.
